(19) Europäisches Patentamt
European Patent Office
Office européen des brevets

(11) EP 4 203 086 A1

(12) EUROPEAN PATENT APPLICATION

(43) Date of publication:
**28.06.2023 Bulletin 2023/26**

(21) Application number: **22213493.4**

(22) Date of filing: **14.12.2022**

(51) International Patent Classification (IPC):
***H01M 4/04*** *(2006.01)* ***H01M 4/131*** *(2010.01)*
***H01M 4/133*** *(2010.01)* ***H01M 4/1393*** *(2010.01)*
***H01M 4/62*** *(2006.01)* ***H01M 10/0525*** *(2010.01)*

(52) Cooperative Patent Classification (CPC):
**H01M 4/0404; H01M 4/131; H01M 4/133; H01M 4/1393; H01M 4/622; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2021 KR 20210180472**

(71) Applicant: **SK On Co., Ltd.**
**Seoul 03161 (KR)**

(72) Inventors:
- **MOON, Gi Hyeon**
  **34124 Daejeon (KR)**
- **LEE, Jong Hyuk**
  **34124 Daejeon (KR)**
- **LEE, Mi Ryeong**
  **34124 Daejeon (KR)**
- **KANG, Hee Gyoung**
  **34124 Daejeon (KR)**
- **KIM, Hyeon A**
  **34124 Daejeon (KR)**

(74) Representative: **Bird & Bird LLP**
**Maximiliansplatz 22**
**80333 München (DE)**

# (54) ELECTRODE FOR LITHIUM SECONDARY BATTERY AND LITHIUM SECONDARY BATTERY INCLUDING THE SAME

(57) An electrode for a lithium secondary battery according to exemplary embodiments includes: an electrode current collector; an electrode active material layer which is formed on at least one surface of the electrode current collector, and includes electrode active material; and a polymer coating which is formed on the electrode active material or the electrode active material layer, and includes polyvinyl alcohol. The polyvinyl alcohol may have an IR spectral peak intensity ratio within a predetermined range. Accordingly, a secondary battery, in which a side reaction between the active material and the electrolyte may be prevented, and structural stability and cycle characteristics are improved, is provided.

[FIG. 1]

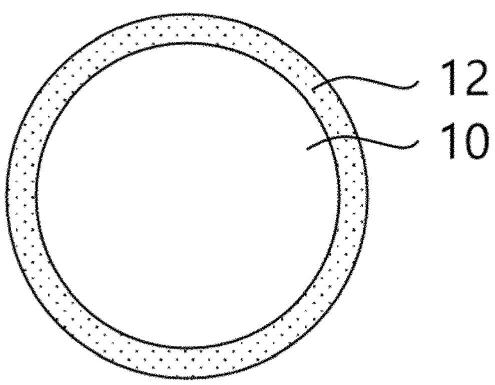


EP 4 203 086 A1

## Description

[BACKGROUND OF THE INVENTION]

1. Field of the Invention

The present invention relates to an electrode for a lithium secondary battery and a lithium secondary battery including the same, and more particularly, to an electrode for a lithium secondary battery which includes an electrode active material and a lithium secondary battery including the electrode.

2. Description of the Related Art

A secondary battery is a battery that can be repeatedly charged and discharged, and is widely applied to portable electronic communication devices such as camcorders, mobile phones, and notebook PCs with the development of information communication and display industries. Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight. In this regard, the lithium secondary battery has been actively developed and applied as a power source.

The lithium secondary battery may include an electrode assembly including a cathode, an anode, and a separation membrane (separator); and an electrolyte in which the electrode assembly is impregnated. The lithium secondary battery may further include, for example, a pouch-shaped outer case in which the electrode assembly and the electrolyte are housed.

For example, the electrode may include electrode active material particles capable of intercalating and deintercalating lithium ions. When repeatedly charging/discharging the secondary battery, in the active material particles, mechanical and chemical damage such as cracking of the particles may occur, and contact between the active material particles may be deteriorated and short circuit problems may occur.

When changing the composition and structure of the electrode active material in order to improve stability of the active material particles, conductivity may be reduced to cause a decrease in an output of the secondary battery. Therefore, development of a secondary battery electrode capable of securing life-span stability and output/capacity characteristics is required.

[SUMMARY OF THE INVENTION]

An object of the present invention is to provide an electrode for a lithium secondary battery having improved electrical properties and stability.

Another object of the present invention is to provide a lithium secondary battery including the electrode having improved electrical properties and stability.

To achieve the above objects, according to an aspect of the present invention, there is provided an electrode for a lithium secondary battery, which includes: an electrode current collector; an electrode active material layer which is formed on at least one surface of the electrode current collector and includes an electrode active material; and a polymer coating which is formed on at least a portion of a surface of the electrode active material or at least a portion of a surface of the electrode active material layer, and includes polyvinyl alcohol satisfying Equation 1 below.

[Equation 1]

$$0.5 \leq I_b/I_a \leq 2.5$$

In Equation 1, $I_a$ means an intensity of a first peak appearing in a range of 1300 $cm^{-1}$ to 1350 $cm^{-1}$ in Fourier transform infrared spectroscopy (FT-IR) spectrum of the polyvinyl alcohol, and $I_b$ means an intensity of a second peak appearing in a range of 1550 $cm^{-1}$ to 1600 $cm^{-1}$ in the Fourier transform infrared spectroscopy (FT-IR) spectrum of the polyvinyl alcohol.

For example, the polyvinyl alcohol may include dehydrated polyvinyl alcohol.

In some embodiments, the polyvinyl alcohol may have a degree of saponification of 80 mol% or less.

In some embodiments, the polyvinyl alcohol may include at least one of structural units represented by Formulas 1 to 5 below.

[Formula 1]

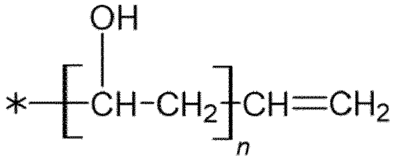

[Formula 2]

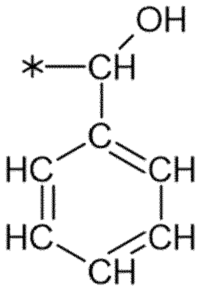

[Formula 3]

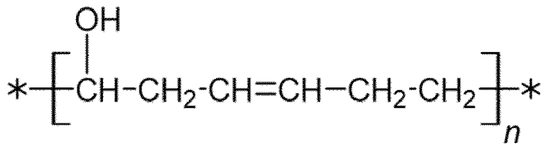

[Formula 4]

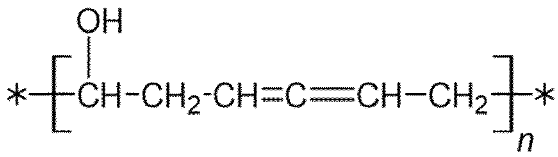

[Formula 5]

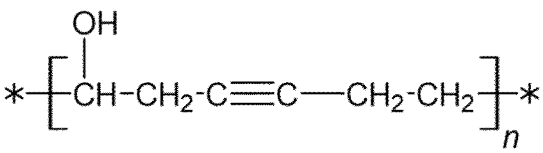

In Formulas 1 to 5, * may be a bond, and n may be an integer of 1 to 100,000.

In some embodiments, the polyvinyl alcohol may have a weight average molecular weight (Mw) of 50,000 Da or more, and preferably 50,000 to 2,000,000 Da.

In some embodiments, a content of the polymer coating may be 0.1 to 10 parts by weight based on 100 parts by weight of the electrode active material layer.

In some embodiments, the polymer coating may further include a lithium salt. For example, the lithium salt may include at least one selected from the group consisting of LiCl, LiF, LiI, $Li_3PO_4$, $LiBO_2$, $LiIO_2$, $Li_2CO_3$, $Li_2B_4O_7$, $Li_2SO_4$, $LiPF_6$, $LiBF_4$, $LiSbF_6$, $LiAsF_6$, $LiClO_4$, $LiCF_3SO_3$, $LiN(SO_2F)_2$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $C_7H_5LiO_2$ (lithium benzoate), $LiAlO_2$ and $LiAlCl_4$.

In some embodiments, the content of the lithium salt may be 0.5 to 30% by weight based on a total weight of the polymer coating.

In some embodiments, the polymer coating may have a lithium ion conductivity of $1 \times 10^{-5}$ to 1.5 S/cm and an electronic conductivity of $1 \times 10^{-5}$ S/cm or less.

In some embodiments, the polymer coating may be formed on both the surface of the electrode active material and the surface of the electrode active material layer, and the polymer coating may have a thickness of 1 to 1,000 nm.

In some embodiments, the electrode for a lithium secondary battery may be an anode or a cathode. For example, the electrode active material may be an anode active material or a cathode active material.

According to another aspect of the present invention, there is provided a lithium secondary battery including: a cathode; and an anode disposed to face the cathode, wherein at least one of the cathode and the anode may be the above-described electrode for a lithium secondary battery.

The electrode for a lithium secondary battery according to exemplary embodiments may include an electrode active material or a polymer coating formed on the surface of the electrode active material layer. Thus, direct contact between the electrode active material and the electrolyte may be prevented by the polymer coating, and volume expansion and structural collapse may be suppressed.

In addition, the polymer coating may include polyvinyl alcohol having an IR spectrum peak intensity ratio within a predetermined range. As the polyvinyl alcohol has the peak intensity ratio within a predetermined range, penetration of an electrolyte into the polymer coating may be prevented, and oxidation/reduction of the active material may be suppressed. Further, the polymer coating has high mechanical strength and elastic modulus, such that structural stability of the electrode may be improved. The polyvinyl alcohol may be dehydrated, and the polymer coating may have high insulation and mechanical stability.

In addition, the polyvinyl alcohol may have a degree of saponification within a predetermined range. In this case, the polymer coating may have low electronic conductivity, and a side reaction between the polymer coating and the electrolyte may be suppressed, and thereby a consumption of the electrolyte may be reduced. Further, it is possible to prevent a deterioration in contact between the electrode active material or the electrode active material layer and the polymer coating, and an occurrence of short circuit inside the battery due to the polymer coating.

In addition, the polymer coating may further include a lithium salt. Accordingly, the lithium ion conductivity of the polymer coating may be improved, and the electronic conductivity may be decreased. Thereby, it is possible to improve stability of the electrode, and provide high capacity characteristics and fast charging performance to the secondary battery.

[BRIEF DESCRIPTION OF THE DRAWINGS]

The above and other objects, features and other advantages of the present invention will be more clearly understood from the following detailed description taken in conjunction with the accompanying drawings, in which:

FIG. 1 is a schematic image illustrating an electrode active material on which a polymer coating is formed according to exemplary embodiments;
FIG. 2 is a schematic cross-sectional view illustrating an electrode for a lithium secondary battery according to exemplary embodiments;
FIG. 3 is a schematic plan view illustrating a lithium secondary battery according to exemplary embodiments;
FIG. 4 is a schematic cross-sectional view illustrating an electrode assembly according to exemplary embodiments; and
FIG. 5 is a graph illustrating FT-IR spectrum of polyvinyl alcohol included in polymer coatings of lithium secondary batteries according to Example 1 and Comparative Example 1.

[DETAILED DESCRIPTION OF THE INVENTION]

Exemplary embodiments of the present invention provide an electrode for a lithium secondary battery, which includes: an electrode current collector; an electrode active material layer which is disposed on the electrode current collector and includes an electrode active material; and a polymer coating which is formed on a surface of the electrode active material or a surface of the electrode active material layer, and includes polyvinyl alcohol, as well as a lithium secondary battery including the electrode.

**<Electrode for lithium secondary battery>**

The electrode for a lithium secondary battery may include an electrode current collector, and an electrode active material layer which is formed on at least one surface of the electrode current collector, and includes an electrode active

material. A polymer coating may be formed on the surface of the electrode active material and/or the surface of the electrode active material layer.

For example, the polymer coating may cover at least a portion of the surface of the electrode active material. For example, the polymer coating may cover at least a portion of the surface of the electrode active material layer. As the polymer coating is formed on the surface of the electrode active material or the surface of the electrode active material layer, direct contact between the electrode active material and the electrolyte may be suppressed, and defects of the electrode active material due to an external impact may be prevented.

In some embodiments, the polymer coating may be formed on both the surface of the electrode active material and the surface of the electrode active material layer. In this case, it is possible to suppress volume expansion and crack occurrence of the electrode active material, and prevent the electrode active material layer from falling off and peeling off the electrode current collector.

The polymer coating may include polyvinyl alcohol. The polyvinyl alcohol may have an IR spectral intensity ratio within a predetermined range.

According to exemplary embodiments, Fourier transform infrared spectroscopy (FT-IR) spectrum of the polyvinyl alcohol may have a first peak appearing in a range of 1300 to 1350 $cm^{-1}$, and a second peak appearing in a range of 1550 to 1600 $cm^{-1}$. The first peak may mean a vibration peak corresponding to a C-H bond, and the second peak may mean a vibration peak corresponding to a C=C bond.

According to exemplary embodiments, the polyvinyl alcohol may satisfy Equation 1 below.

[Equation 1]

$$0.5 \leq I_b/I_a \leq 2.5$$

In Equation 1, $I_a$ means an intensity of a first peak appearing in a range of 1300 to 1350 $cm^{-1}$ in Fourier transform infrared spectroscopy (FT-IR) spectrum of the polyvinyl alcohol, and $I_b$ means an intensity of a second peak appearing in a range of 1550 to 1600 $cm^{-1}$ in the Fourier transform infrared spectroscopy (FT-IR) spectrum of the polyvinyl alcohol.

For example, after forming a film sample by vacuum drying polyvinyl alcohol, the FT-IR spectrum may be measured on the sample by an attenuated total reflection (ATR) mode using an FTIR detector (DTGS detector, MIR source, KBr beam splitter).

For example, Equation 1 may mean a ratio of a height of the second peak to a height of the first peak appearing in the FT-IR spectrum. An intensity ratio of the second peak to the first peak of the polyvinyl alcohol may be 0.5 or more. For example, the intensity ratio of the second peak to the first peak in the FR-IR spectrum may be 0.5 to 2.5.

In one embodiment, the intensity ratio ($I_b/I_a$) of the second peak to the first peak of the polyvinyl alcohol may be 0.5 to 2, and preferably 0.5 to 1.5.

Within the above range, mechanical strength and structural stability of the polymer coating may be improved, and penetration of an electrolyte into the electrode active material may be prevented.

For example, if the intensity ratio of the second peak to the first peak ($I_b/I_a$) is less than 0.5, the mechanical strength of the polymer coating may be reduced, and a side reaction between the electrode active material and the electrolyte may occur. If the intensity ratio ($I_b/I_a$) of the second peak to the first peak exceeds 2.5, polyvinyl alcohol chains are too rigid, such that flexibility of the polymer coating may be reduced, and storage modulus and mechanical properties may be decreased.

In some embodiments, the polyvinyl alcohol may be dehydrated polyvinyl alcohol. For example, the IR spectral intensity ratio of polyvinyl alcohol may be adjusted within the above-described range depending on the degree of dehydration.

When polyvinyl alcohol is dehydrated at a predetermined temperature, for example, at a temperature of 120 °C or higher, a hydroxyl group (-OH) reacts with hydrogen adjacent thereto, such that a carbon double bond (C=C) or a carbon triple bond (C≡C) may be introduced therein. Thereby, the intensity ratio of the peak corresponding to the C-H bond may be decreased, and the intensity ratio of the peak corresponding to the C=C bond may be increased.

The dehydrated polyvinyl alcohol may have low swelling property and high Young's modulus with respect to an organic solvent. For example, the dehydrated polyvinyl alcohol has high insulation and mechanical stability, such that a side reaction between the electrode active material and the electrolyte may be prevented. Accordingly, oxidation/reduction of the electrode active material by the electrolyte may be prevented, and structural collapse and cracks of the electrode active material due to driving at high temperature/high voltage and physical impact may be prevented.

According to exemplary embodiments, the polyvinyl alcohol may have a degree of saponification (DS) of 80 mol% or less. Preferably, the degree of saponification of the polyvinyl alcohol may be 75 mol% or less, and more preferably 70 mol% or less. Preferably, the degree of saponification of the polyvinyl alcohol is greater than 30 mol% and 70 mol% or less.

For example, the degree of saponification (DS) of the polyvinyl alcohol may be measured through Equation 2 below.

[Equation 2]

$$0.6/44 \times DS = (b-a)/10000$$

In Equation 2, a may be a titrated amount (ml) of a 0.1 M NaOH solution with respect to a 0.2 M $H_2SO_4$ solution to which the polyvinyl alcohol is added. b may be a titrated amount (ml) of a 0.1 M NaOH solution with respect to a 0.2 M $H_2SO_4$ solution to which the polyvinyl alcohol is not added.

The hydroxyl group present in the polyvinyl alcohol may react with the electrolyte in an initial formation process. Therefore, when polyvinyl alcohol has a high hydroxyl group content in the polymer coating, irreversible capacity of the lithium secondary battery may be increased, and gas may be generated due to the side reaction. For example, if the degree of saponification of polyvinyl alcohol exceeds 80 mol%, the polymer coating may react with the electrolyte to be dissolved in the organic solvent, and the life-span and capacity characteristics of the battery may be deteriorated.

As the polymer coating of the electrode for a lithium secondary battery according to exemplary embodiments includes polyvinyl alcohol having a degree of saponification of 80 mol% or less, mechanical strength and elongation may be increased, and electrochemical stability may be enhanced.

According to exemplary embodiments, the polyvinyl alcohol may include at least one of structural units represented by Formulas 1 to 5 below.

[Formula 1]

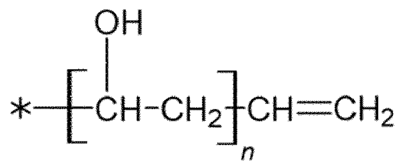

[Formula 2]

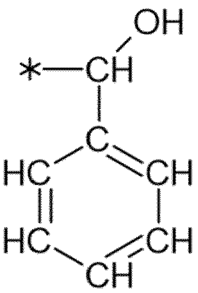

[Formula 3]

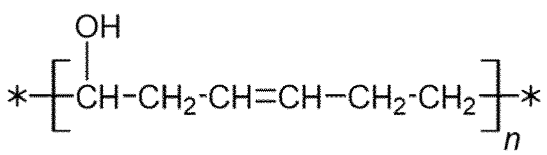

[Formula 4]

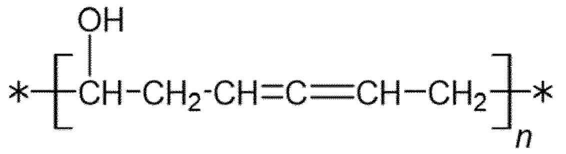

[Formula 5]

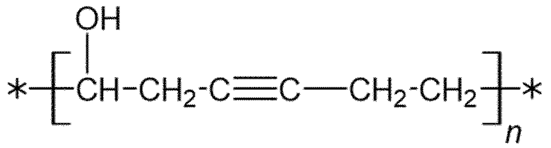

In Formulas 1 to 5, * may be a bond, and n may be an integer of 1 to 100,000.

For example, the structural units of Formulas 1 and 2 may be located at terminals of polyvinyl alcohol, and the structural units of Formulas 3 to 5 may form a main chain of the polyvinyl alcohol.

As used herein, the term "main chain" may refer to a portion consisting of a chain of the longest atoms in a molecular structure.

As the polyvinyl alcohol includes the structural units represented by Formulas 1 to 5, mechanical properties of the polymer coating may be improved, and structural stability of the electrode active material or the electrode active material layer may be enhanced. For example, the structural units represented by Formulas 1 to 5 may be included in an amount of 30 parts by weight ("wt. parts") or more based on 100 wt. parts of polyvinyl alcohol, preferably 30 to 80 wt. parts, and more preferably greater than 30 wt. parts and 70 wt. parts or less. In this case, life-span characteristics and driving stability of the battery at high temperature/high pressure may be improved.

In some embodiments, the polyvinyl alcohol may form crosslinking with a neighboring polyvinyl alcohol in the polymer coating. For example, a cross-linked network may be formed between polyvinyl alcohol chains adjacent to each other within the polymer coating. For example, the cross-linked network may be formed by an ether bond between hydroxyl groups of adjacent polyvinyl alcohol by a dehydration reaction, and thereby polyvinyl alcohol chains may be cross-linked with each other. Accordingly, the mechanical strength of the polymer coating is enhanced, such that a change in the volume and an occurrence of a short circuit inside the battery during charging and discharging may be suppressed, and penetration of the electrolyte into the electrode active material may be physically blocked.

According to exemplary embodiments, the polyvinyl alcohol may have a weight average molecular weight (Mw) of 50,000 Da or more. In one embodiment, the polyvinyl alcohol may have a weight average molecular weight of 50,000 to 2,000,000 Da, and preferably 100,000 to 1,000,000 Da. For example, the weight average molecular weight may be calculated in terms of polystyrene based on measurement results of gel permeation chromatography (GPC).

If the weight average molecular weight of polyvinyl alcohol is less than 50,000 Da, tensile modulus and elongation of the polymer coating may be reduced. If the weight average molecular weight of polyvinyl alcohol exceeds 2,000,000 Da, film formability and wettability of the polymer coating may be reduced.

In some embodiments, the polyvinyl alcohol may have a glass transition temperature of 70 °C or higher, preferably 78 °C or higher, and may be 80 to 100 °C. Within the above range, thermal stability of the polymer coating may be enhanced, and high temperature stability and high temperature cycle characteristics of the secondary battery may be improved.

In some embodiments, the polyvinyl alcohol may be included in an amount of 20 to 70% by weight ("wt.%"), and preferably 30 to 70 wt.% based on a total weight of the polymer coating. Within the above range, the mechanical strength and electrochemical stability of the polymer coating may be improved.

According to exemplary embodiments, the polymer coating may further include a lithium salt. When the polymer coating includes the lithium salt, intercalation and deintercalation rates of lithium ions may be enhanced, and thereby, side reactions and capacity loss due to overvoltage generating during high-speed charging may be prevented.

For example, the lithium salt may include at least one selected from the group consisting of LiCl, LiF, LiI, $Li_3PO_4$, $LiBO_2$, $LiIO_2$, $Li_2CO_3$, $Li_2B_4O_7$, $Li_2SO_4$, $LiPF_6$, $LiBF_4$, $LiSbF_6$, $LiAsF_6$, $LiClO_4$, $LiCF_3SO_3$, $LiN(SO_2F)_2$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $C_7H_5LiO_2$ (lithium benzoate), $LiAlO_2$ and $LiAlCl_4$. These may be used alone or in combination of two or more thereof.

In some embodiments, the content of the lithium salt may be 0.5 to 30 wt.% based on the total weight of the

polymer coating, and preferably 0.5 to 20 wt.%. Within the above range, the polymer coating may have high lithium ion conductivity and low electronic conductivity. Thereby, electrochemical stability may be improved, and side reactions with the electrolyte may be suppressed, such that life-span and storage stability may be improved.

In some embodiments, the polymer coating may have a form of a polymer electrolyte in which polyvinyl alcohol and lithium salt are mixed. For example, the polymer coating may have a lithium ion conductivity of $1 \times 10^{-5}$ S/cm or more and an electronic conductivity of $1 \times 10^{-5}$ S/cm or less. For example, the lithium ion conductivity and electronic conductivity may be calculated by measuring a resistance with electrochemical impedance spectroscopy (EIS), and then converting the measured resistance into a thickness and an area of the polymer coating.

For example, the lithium ion conductivity of the polymer coating may be $1 \times 10^{-5}$ to 1.5 S/cm, and preferably $1 \times 10^{-4}$ to 1.5 S/cm. When the polymer coating has high lithium ion conductivity, an increase in the resistance due to the coating may be suppressed, and the life-span characteristics, initial efficiency, and stability of the secondary battery may be improved.

For example, the electronic conductivity of the polymer coating may be $1 \times 10^{-9}$ S/cm or less, and preferably $1 \times 10^{-13}$ S/cm or less. As the polymer coating has low electronic conductivity, oxidation/reduction or side reactions of the electrode active material may be prevented, and cycle characteristics and operational stability of the lithium secondary battery may be enhanced.

According to exemplary embodiments, the content of the polymer coating may be 0.01 to 10 wt. parts, and preferably 0.02 to 2 wt. parts based on 100 wt. parts of the electrode active material layer. If the content of the polymer coating is less than 0.01 wt. parts, a coating coverage ratio for the electrode active material or the electrode active material layer may be reduced. If the content of the polymer coating exceeds 10 wt. parts, the coating layer becomes thicker and an increase in internal resistance becomes larger, such that the performance of the battery may be deteriorated.

According to exemplary embodiments, the polymer coating may be formed on the surface of the electrode active material.

FIG. 1 is a schematic cross-sectional view illustrating an electrode active material according to exemplary embodiments.

Referring to FIG. 1, a polymer coating 12 may cover at least a portion of the surface of an electrode active material 10.

For example, the polymer coating 12 may be formed by a wet coating method.

In one embodiment, after mixing a solution including polyvinyl alcohol satisfying the above-described IR spectral intensity ratio with the electrode active material 10 and stirring the mixture, the polymer coating 12 may be formed through heat treatment or drying.

In one embodiment, after mixing the solution including polyvinyl alcohol with the electrode active material 10 and stirring the mixture, the polymer coating 12 is formed through heat treatment, and then the polyvinyl alcohol may be dehydrated by performing high temperature heat treatment. For example, the high temperature heat treatment may be performed so that the IR spectral intensity ratio of polyvinyl alcohol satisfies the above-described range. For example, the heat treatment temperature may be 120 °C or higher, and may be 120 to 250 °C.

In some embodiments, the polymer coating 12 may have a thickness of 1 to 1,000 nm, and preferably 1 to 200 nm. If the thickness of the polymer coating 12 is less than 1 nm, a side reaction with the electrolyte may occur, and structural collapse of the active material may occur. If the thickness of the polymer coating 12 exceeds 1,000 nm, resistance may be increased due to the coating formed to be thicker, and initial efficiency and performance of the lithium secondary battery may be reduced.

In exemplary embodiments, the polymer coating may be formed on the surface of the electrode active material layer.

FIG. 2 is a schematic cross-sectional view illustrating an electrode 20 for a lithium secondary battery according to exemplary embodiments.

Referring to FIG. 2, the electrode 20 for a lithium secondary battery may include an electrode current collector 22, an electrode active material layer 24 formed on at least one surface of the electrode current collector 22, and a polymer coating 26 formed on at least a portion of the surface of the electrode active material layer 24 to cover the same.

According to exemplary embodiments, the electrode active material layer 24 may be formed on both surfaces (e.g., upper and lower surfaces) of the electrode current collector 22. For example, the electrode active material layer 24 may be coated on the upper and lower surfaces of the electrode current collector 22, respectively, and may be directly coated on the surface of the electrode current collector 22.

In one embodiment, the polymer coating 26 may be formed by applying a solution including polyvinyl alcohol having an IR spectral intensity ratio in the above-described range on the electrode active material layer 24, followed by drying the same.

In one embodiment, a solution including polyvinyl alcohol is applied to the electrode active material layer 24 and dried to form the polymer coating 26, and then the polyvinyl alcohol may be dehydrated by performing high temperature heat treatment. The IR spectrum intensity ratio of polyvinyl alcohol may satisfy the above-described range by the heat treatment process. For example, the heat treatment temperature may be 120 °C or higher, and may be 120 to 250 °C.

In one embodiment, a solution including polyvinyl alcohol having an IR spectral intensity ratio in the above-described range is applied to a separate substrate, followed by drying the same, to form a film type polymer coating 26, and then the polymer coating 26 peeled-off from the substrate may be disposed on the electrode active material layer 24.

In some embodiments, the polymer coating 26 may have a thickness of 1 to 1,000 nm, and preferably 1 to 200 nm. Within the above range, stability of the electrode active material layer 24 and initial efficiency of the secondary battery may be enhanced.

According to exemplary embodiments, the electrode 20 for a lithium secondary battery may be a cathode including a cathode active material or an anode including an anode active material. For example, the electrode current collector 22 may be a cathode current collector, and the electrode active material layer 24 may be a cathode active material layer. For example, the electrode current collector 22 may be an anode current collector, and the electrode active material layer 24 may be an anode active material layer.

In some embodiments, the cathode active material may include a lithium metal oxide, for example, a lithium (Li)-nickel (Ni) oxide or a lithium iron phosphate compound ($LiFePO_4$).

For example, the lithium metal oxide included in the cathode active material layer may be represented by Formula 6 below.

[Formula 6] $$Li_{1+a}Ni_{1-(x+y)}Co_xM_yO_2$$

In Formula 6, $\alpha$, x and y may be in a range of $-0.05 \leq a \leq 0.15$, $0 \leq x \leq 1$, $0 \leq y \leq 1$, and $0 \leq x+y \leq 1$, and M may be at least one selected from the group consisting of Mg, Sr, Ba, B, Al, Si, Mn, Ti, Zr and W. In one embodiment, x and y may be in a range of $0.01 \leq x \leq 0.2$, and $0.01 \leq y \leq 0.2$.

Preferably, in Formula 6, M may be manganese (Mn). In this case, a nickel-cobalt-manganese (NCM) lithium oxide may be used as the cathode active material.

In some embodiments, the anode active material may include carbon-based materials such as crystalline carbon, amorphous carbon, carbon composite, carbon fiber, etc.; a lithium alloy; silicon or tin.

Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, graphite cokes, graphite MCMB, graphite MPCF or the like. As an element included in the lithium alloy, Al, Zn, Bi, Cd, At, Si, Pb, Sn, Ga or In may be used.

**<Lithium secondary battery>**

A lithium secondary battery according to exemplary embodiments includes a cathode and an anode disposed to face the upper cathode, and the electrode for a lithium secondary battery including a polymer coating according to exemplary embodiments may be at least one of the cathode and the anode.

FIGS. 3 and 4 are a schematic plan view and a cross-sectional view of a secondary battery according to exemplary embodiments, respectively. For example, FIG. 4 is a cross-sectional view taken on line I-I' shown in FIG. 3 in a thickness direction of the lithium secondary battery.

Referring to FIGS. 3 and, the secondary battery may include an electrode assembly 150 and a case 160 in which the electrode assembly 150 is housed. The electrode assembly 150 may include a first electrode as a cathode 100, a second electrode as an anode 130, and a separation membrane 140.

The cathode 100 may include a cathode current collector 105 and a cathode active material layer 110 formed on at least one surface of the cathode current collector 105. In some embodiments, the above-described polymer coating may be formed on at least a portion of the surface of the cathode active material layer.

According to exemplary embodiments, the cathode active material layer 110 may be formed on both surfaces (e.g., upper and lower surfaces) of the cathode current collector 105. For example, the cathode active material layer 110 may be coated on the upper and lower surfaces of the cathode current collector 105, respectively, and may be directly coated on the surface of the cathode current collector 105.

The cathode current collector 105 may include, for example, stainless steel, nickel, aluminum, titanium, copper, or an alloy thereof, and preferably includes aluminum or an aluminum alloy.

According to some embodiments, in the case of the cathode active material layer 110, a cathode slurry may be coated on the cathode current collector 105, followed by compressing and drying to form the cathode active material layer 110. For example, the cathode slurry may be prepared by mixing the cathode active material with a binder, a conductive material and/or a dispersant in a solvent, followed by stirring the same. In some embodiments, the above-described polymer coating may be formed on at least a portion of the surface of the cathode active material.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer 110 may be reduced and an amount of the cathode active material or lithium metal oxide particles may be relatively increased. Thereby, the output and capacity of the secondary battery may be improved.

The conductive material may be included to facilitate electron transfer between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as $LaSrCoO_3$, and $LaSrMnO_3$, etc.

In some embodiments, the cathode 100 may have an electrode density of 3.0 to 3.9 g/cc, and preferably 3.2 to 3.8 g/cc.

The anode 130 may include an anode current collector 125 and an anode active material layer 120 formed on at least one surface of the anode current collector 125. In some embodiments, the polymer coating may be formed on at least a portion of the surface of the anode active material layer 120.

According to exemplary embodiments, the anode active material layer 120 may be formed on both surfaces (e.g., upper and lower surfaces) of the anode current collector 125. The anode active material layer 120 may be coated on the upper and lower surfaces of the anode current collector 125, respectively, and may be in direct contact with the surface of the anode current collector 125.

The anode current collector 125 may include gold, stainless steel, nickel, aluminum, titanium, copper or an alloy thereof, and preferably includes copper or a copper alloy.

According to exemplary embodiments, in the case of the anode active material layer 120, an anode slurry may be applied (coated) to the anode current collector 125, followed by compressing and drying to form the anode active material layer 120. For example, the anode slurry may be prepared by mixing the anode active material with a binder, a conductive material and/or a dispersing material in a solvent, followed by stirring the same. In some embodiments, the above-described polymer coating may be formed on at least a portion of the surface of the anode active material.

Materials substantially the same as or similar to those used for forming the cathode 100 may be used as the binder and the conductive material. In some embodiments, the binder for forming the anode 130 may include, for example, styrene-butadiene rubber (SBR) or an acrylic binder for consistency with the carbon-based active material, and may be used together with a thickener such as carboxymethyl cellulose (CMC).

In exemplary embodiments, the anode active material layer 120 may have a density of 1.4 to 1.9 g/cc.

In some embodiments, the anode 130 may have an area (e.g., a contact area with the separation membrane 140) and/or volume larger than those/that of the cathode 100. Thereby, lithium ions generated from the cathode 100 may smoothly move to the anode 130 without being precipitated in the middle, such that output and capacity characteristics may be further improved.

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane may include a nonwoven fabric made of glass fiber having a high melting point, polyethylene terephthalate fiber or the like.

The separation membrane 140 may extend in a second direction between the cathode 100 and the anode 130, and may be folded and wound in the thickness direction of the lithium secondary battery. Accordingly, a plurality of cathodes 100 and anodes 130 may be laminated in the thickness direction with the separation membrane 140 interposed therebetween.

According to exemplary embodiments, an electrode cell is defined by the cathode 100, the anode 130, and the separation membrane 140, and a plurality of electrode cells are laminated to form, for example, a jelly roll type electrode assembly 150. For example, the electrode assembly 150 may be formed by winding, lamination, folding, or the like of the separation membrane 140.

The electrode assembly 150 is housed in the case 160, and an electrolyte may be injected into the case 160 together. The case 160 may include, for example, a pouch, a can, or the like in shape.

According to exemplary embodiments, a non-aqueous electrolyte may be used as the electrolyte.

The non-aqueous electrolyte includes a lithium salt of an electrolyte and an organic solvent, and the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide (DMSO), acetonitrile, dimethoxyethane, diethoxyethane, vinylene carbonate, sulforane, γ-butyrolactone, propylene sulfite, tetrahydrofurane, and the like may be used. These compounds may be used alone or in combination of two or more thereof.

As illustrated in FIG. 4, electrode tabs (a cathode tab and an anode tab) protrude from the cathode current collector 105 and the anode current collector 125, respectively, which belong to each electrode cell, and may extend to one side of an outer case 160. The electrode tabs may be fused together with the one side of the outer case 160 to form electrode leads (a cathode lead 107 and an anode lead 127) extending or exposed to an outside of the outer case 160.

FIG. 4 illustrates that the cathode lead 107 and the anode lead 127 are formed on the same side of the lithium secondary battery or the outer case 160, but these electrode leads may be formed on sides opposite to each other.

For example, the cathode lead 107 may be formed on one side of the outer case 160, and the anode lead 127 may be formed on the other side of the outer case 160.

The lithium secondary battery may be manufactured, for example, in a cylindrical shape using a can, a square shape, a pouch type or a coin shape.

Hereinafter, specific experimental examples are proposed to facilitate understanding of the present invention. However, the following examples are only given for illustrating the present invention and those skilled in the art will obviously understand that various alterations and modifications are possible within the scope and spirit of the present invention. Such alterations and modifications are duly included in the appended claims.

## Preparative Example: Preparation of polymer coating solution

An aqueous solution, in which polyvinyl alcohol (PVA) (Mw: about 180,000) and/or lithium salt (LiCl) were added, was prepared so as to satisfy content ratios of Table 1 below.

Peak intensity ratios and degrees of saponification of PVA in Table 1 below were measured after eluting and drying PVA from anode active materials or anodes according to examples and comparative examples using dimethyl sulfoxide (DMSO).

Specifically, after vacuum drying the eluted PVA to prepare a film sample, the peak intensity ratios and degrees of saponification were measured using an FTIR detector (DTGS detector, MIR source, KBr beam splitter) in an ATR mode.

The peak intensity ratio was calculated as a ratio to a height of a second peak appearing at 1570 $cm^{-1}$ to a height of a first peak appearing at 1330 $cm^{-1}$ by measuring FT-IR spectrum on the PVA film sample.

For example, FIG. 5 is a graph illustrating the FT-IR spectrum of PVA eluted from the electrodes of Example 1 and Comparative Example 1. Referring to FIG. 5, it can be confirmed that, in the case of Example 1, the intensity ratio of the second peak to the first peak is 2.2, and in the case of Comparative Example 1, it can be confirmed that the intensity ratio of the second peak to the first peak is 0.25.

The degree of saponification of the polyvinyl alcohol was measured by the following method.

0.6 g of polyvinyl alcohol and 20 ml of ultrapure water were put into a reactor and dissolved, then 5.0 ml of 0.2 M NaOH solution was added, followed by stirring the mixture. Then, 5.0 ml of 0.2 M $H_2SO_4$ solution was put, and phenolphthalein indicator was added, then $H_2SO_4$ was titrated with 0.1 M NaOH solution until a red color appeared, and a titrated amount a (ml) was measured.

Titration was performed in the same method as above, except that polyvinyl alcohol was not added, and a titrated amount (ml) b was measured.

Thereafter, the degree of saponification (DS) of polyvinyl alcohol was calculated using Equation 2 below.

[Equation 2]

$$0.6/44 \times DS = (b-a)/10000$$

[TABLE 1]

| Section | Polyvinyl alcohol | | | Lithium salt (LiCl) |
|---|---|---|---|---|
| | Intensity ratio of second peak to First peak | Degree of saponification (mol%) | Content (wt. %) | Content (wt.%) |
| A-1 | 0.5 | 82 | 95 | 5 |
| A-2 | 0.25 | 99 | 100 | - |

(continued)

| Section | Polyvinyl alcohol | | | Lithium salt (LiCl) |
|---|---|---|---|---|
| | Intensity ratio of second peak to First peak | Degree of saponification (mol%) | Content (wt.%) | Content (wt.%) |
| A-3 | 0.55 | 78 | 100 | - |
| A-4 | 1.3 | 60 | 100 | - |
| A-5 | 2.2 | 35 | 100 | - |

**Examples and Comparative Examples**

(1) **Preparation of anode active material including polymer coating**

100 g of artificial graphite (D50: 10 μm) and 37.5 g of the prepared polymer coating solution were put into a mixer (manufactured by Inoue), and mixed for 2 hours at a stirring speed of 20 Hz, followed by drying the mixture at a temperature of 60 °C in a vacuum state to form polymer coating.

Thereafter, the anode active material was subjected to heat treatment, thus to dehydrate polyvinyl alcohol. At this time, the heat treatment was performed at a temperature of 120 °C for A-1, 25 °C for A-2, 140 °C for A-3, 160 °C for A-4, and 180 °C for A-5 for 1 hour, respectively.

(2) **Preparation of anode and secondary battery**

Compositions for an anode were prepared by mixing the prepared anode active materials, conductive materials, binders, thickeners and dispersants. The compositions for an anode were applied to Cu foil, dried and rolled to prepare anode active material layers having slurry densities of 10 $mg/cm^2$ and 1.7 g/cc.

The prepared polymer coating solution was applied to the anode active material layers, followed by drying the same at a temperature of 60 °C to form a polymer coating.

Thereafter, polyvinyl alcohol was dehydrated through heat treatment on the anode active material layers to prepare anode active material layers including the polymer coating. At this time, the heat treatment was performed at a temperature of 120 °C for A-1, 25 °C for A-2, 140 °C for A-3, 160 °C for A-4, and 180 °C for A-5 for 1 hour, respectively.

A coin cell type secondary battery was manufactured using Li foil as a counter electrode and an electrolyte containing 1 M $LiPF_6$ in a mixed solvent of EC and EMC (EC:EMC = 3:7).

[TABLE 2]

| | **Anode active material** | | | **Anode** | | |
|---|---|---|---|---|---|---|
| | Coated or not | Polymer coating | Coating thickness (nm) | Coated or not | Polymer coating | Coating thickness (nm) |
| Example 1 | X | - | - | ○ | A-5 | 10 |
| Example 2 | X | - | - | ○ | A-5 | 100 |
| Example 3 | X | - | - | ○ | A-5 | 1200 |
| Example 4 | X | - | - | ○ | A-1 | 10 |
| Example 5 | X | - | - | ○ | A-3 | 10 |
| Example 6 | X | - | - | ○ | A-4 | 10 |
| Example 7 | ○ | A-5 | 10 | X | - | |
| Example 8 | ○ | A-5 | 350 | X | - | |
| Example 9 | ○ | A-5 | 1100 | X | - | |
| Example 10 | ○ | A-3 | 10 | X | - | |
| Example 11 | ○ | A-4 | 10 | X | - | |
| Example 12 | ○ | A-5 | 10 | X | - | |

(continued)

| | Anode active material | | | Anode | | |
|---|---|---|---|---|---|---|
| | Coatedor not | Polymer coating | Coating thickness (nm) | Coatedor not | Polymer coating | Coating thickness (nm) |
| Example 13 | ○ | A-5 | 10 | ○ | A-5 | 10 |
| Comparative Example 1 | X | - | - | ○ | A-2 | 100 |
| Comparative Example 2 | ○ | A-2 | 50 | X | - | - |
| Comparative Example 3 | ○ | A-2 | 50 | ◦ | A-2 | 100 |
| Comparative Example 4 | X | - | - | X | - | - |

**Experimental example**

**(1) Evaluation of initial efficiency**

After performing charging (CC/CV 0.5 C 4.2 V 0.05 C CUT-OFF) and discharging (CC 0.5 C 2.5 V CUT-OFF) on the secondary batteries according to the examples and comparative examples, initial charge/discharge capacities were measured (CC: Constant Current, and CV: Constant Voltage). Initial efficiency was evaluated as a percentage of a value obtained by dividing the initial discharge capacity by the initial charge capacity.
Evaluation results are shown in Table 3 below.

**(2) Evaluation of capacity retention rate**

300 cycles of charging/discharging were repeatedly performed on the secondary batteries according to the examples and comparative examples in a way of executing charging (CC/CV method, current rate 0.5 C, upper limit voltage 4.2 V, cut-off current 0.05 C) and discharging (CC, 0.5 C, lower limit voltage 2.5 V cut-off) at 25 °C was set to be one cycle. Thereafter, the capacity retention rate was evaluated as a percentage of the value obtained by dividing the discharge capacity at 300 cycles by the discharge capacity at one cycle.
Evaluation results are shown in Table 3 below.

[TABLE 3]

| Section | Initial efficiency (%) | Capacity retention rate (%) (@300cycle) |
|---|---|---|
| Example 1 | 95.8 | 93.1 |
| Example 2 | 95.8 | 93.1 |
| Example 3 | 95.7 | 92.9 |
| Example 4 | 95.5 | 93.0 |
| Example 5 | 95.4 | 92.8 |
| Example 6 | 95.4 | 92.7 |
| Example 7 | 95.2 | 93.8 |
| Example 8 | 95.6 | 93.7 |
| Example 9 | 95.5 | 93.0 |
| Example 10 | 95.6 | 93.1 |
| Example 11 | 95.5 | 93.4 |
| Example 12 | 95.2 | 93.5 |

(continued)

| Section | Initial efficiency (%) | Capacity retention rate (%) (@300cycle) |
|---|---|---|
| Example 13 | 95.4 | 93.2 |
| Comparative Example 1 | 95.4 | 89.1 |
| Comparative Example 2 | 95.1 | 88.2 |
| Comparative Example 3 | 95.2 | 88.3 |
| Comparative Example 4 | 95.1 | 88.3 |

Referring to Table 3, in the case of the secondary batteries according to the examples, it can be confirmed that, as the polymer coating including polyvinyl alcohol having a predetermined IR spectrum peak intensity ratio is formed on the surface of the anode or the anode active material, initial efficiency, and capacity retention rate were improved.

However, in the case of the secondary batteries according to the comparative examples, it can be confirmed that, as the peak intensity ratio of polyvinyl alcohol is low, the initial efficiency was low and the capacity retention rate was deteriorated.

Further, in the case of the secondary battery according to Comparative Example 4, it can be confirmed that, as both the anode and the anode active material do not include the polymer coating, the capacity retention rate was reduced.

## Claims

**1.** An electrode for a lithium secondary battery comprising:

an electrode current collector;
an electrode active material layer which is formed on at least one surface of the electrode current collector and includes an electrode active material; and
a polymer coating which is formed on at least a portion of a surface of the electrode active material or at least a portion of a surface of the electrode active material layer, and includes polyvinyl alcohol satisfying Equation 1 below:

[Equation 1]

$$0.5 \leq I_b/I_a \leq 2.5$$

wherein, in Equation 1, $I_a$ is an intensity of a first peak appearing in a range of 1300 to 1350 $cm^{-1}$ in Fourier transform infrared spectroscopy (FT-IR) spectrum of the polyvinyl alcohol, and $I_b$ is an intensity of a second peak appearing in a range of 1550 to 1600 $cm^{-1}$ in the Fourier transform infrared spectroscopy (FT-IR) spectrum of the polyvinyl alcohol.

**2.** The electrode for a lithium secondary battery according to claim 1, wherein the polyvinyl alcohol is dehydrated.

**3.** The electrode for a lithium secondary battery according to claims 1 or 2, wherein the polyvinyl alcohol comprises at least one of structural units represented by Formulas 1 to 5 below:

[Formula 1]

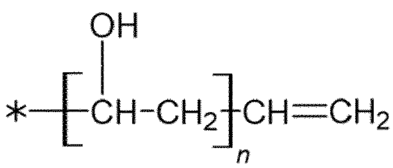

[Formula 2]

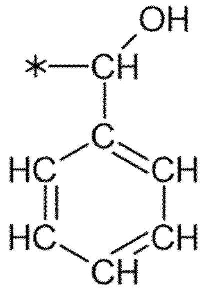

[Formula 3]

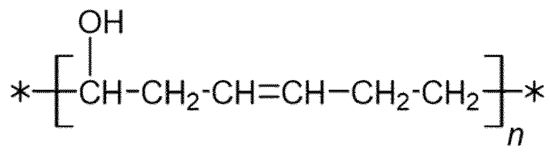

[Formula 4]

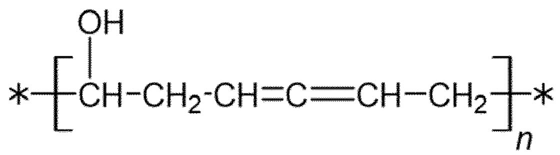

[Formula 5]

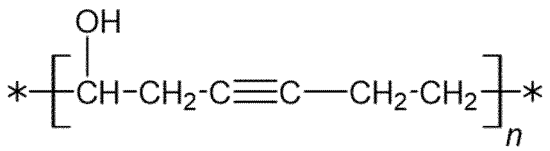

wherein, in Formulas 1 to 5, * is a bond, and n is an integer of 1 to 100,000.

**4.** The electrode for a lithium secondary battery according to any one of claims 1 to 3, wherein the polyvinyl alcohol has a weight average molecular weight (Mw) of 50,000 Da to 2,000,000 Da.

**5.** The electrode for a lithium secondary battery according to any one of claims 1 to 4, wherein the polyvinyl alcohol has a degree of saponification of 80 mol% or less.

**6.** The electrode for a lithium secondary battery according to any one of claims 1 to 5, wherein a content of the polymer coating is 0.01 to 10 parts by weight based on a total 100 parts by weight of the electrode active material layer.

**7.** The electrode for a lithium secondary battery according to any one of claims 1 to 6, wherein the polymer coating further comprises a lithium salt.

**8.** The electrode for a lithium secondary battery according to claim 7, wherein the lithium salt includes at least one selected from the group consisting of LiCl, LiF, LiI, $Li_3PO_4$, $LiBO_2$, $LiIO_2$, $Li_2CO_3$, $Li_2B_4O_7$, $Li_2SO_4$, $LiPF_6$, $LiBF_4$, $LiSbF_6$, $LiAsF_6$, $LiClO_4$, $LiCF_3SO_3$, $LiN(SO_2F)_2$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $C_7H_5LiO_2$ (lithium benzoate), $LiAlO_2$ and $LiAlCl_4$.

**9.** The electrode for a lithium secondary battery according to claims 7 or 8, wherein the content of the lithium salt is 0.5 to 30% by weight based on a total weight of the polymer coating.

**10.** The electrode for a lithium secondary battery according to any one of claims 7 to 9, wherein the polymer coating has a lithium ion conductivity of $1 \times 10^{-5}$ S/cm to 1.5 S/cm and an electronic conductivity of $1 \times 10^{-5}$ S/cm or less.

**11.** The electrode for a lithium secondary battery according to any one of claims 1 to 10, wherein the polymer coating has a thickness of 1 nm to 1,000 nm.

**12.** The electrode for a lithium secondary battery according to any one of claims 1 to 11, wherein the polymer coating is formed on both the surface of the electrode active material and the surface of the electrode active material layer.

**13.** The electrode for a lithium secondary battery according to any one of claims 1 to 12, wherein the electrode for a lithium secondary battery is an anode or a cathode.

**14.** A lithium secondary battery comprising:

a cathode; and
an anode disposed to face the cathode,
wherein at least one of the cathode and the anode is the electrode for a lithium secondary battery according to any one of claims 1 to 13.

[FIG. 1]

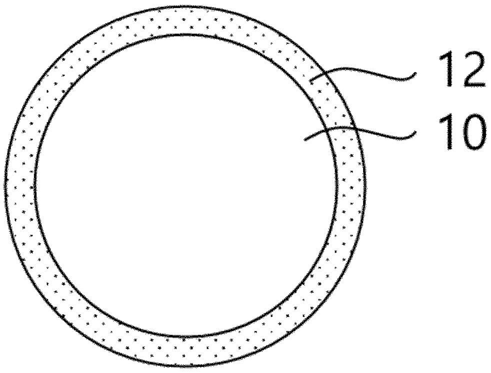


[FIG. 2]

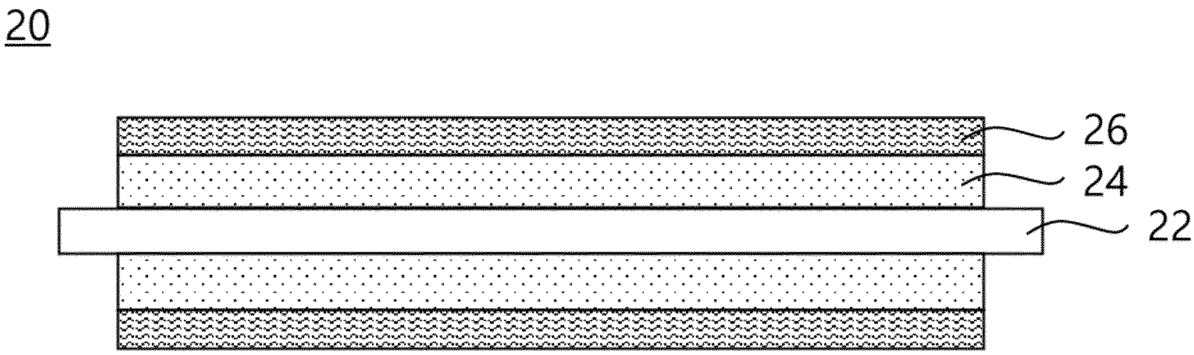

[FIG. 3]

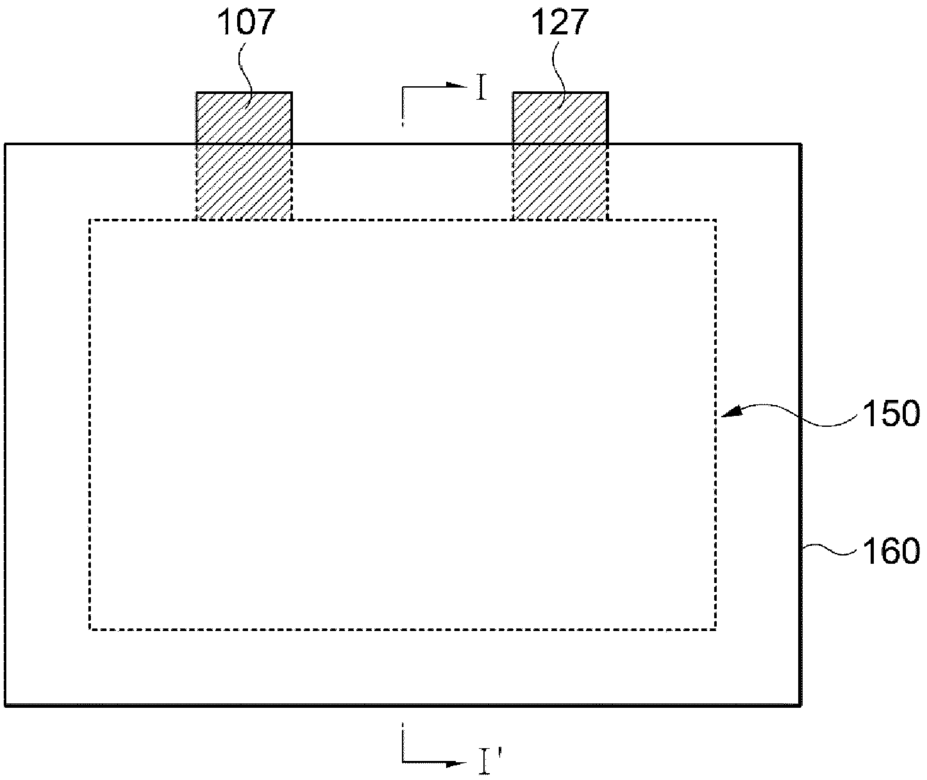


[FIG. 4]

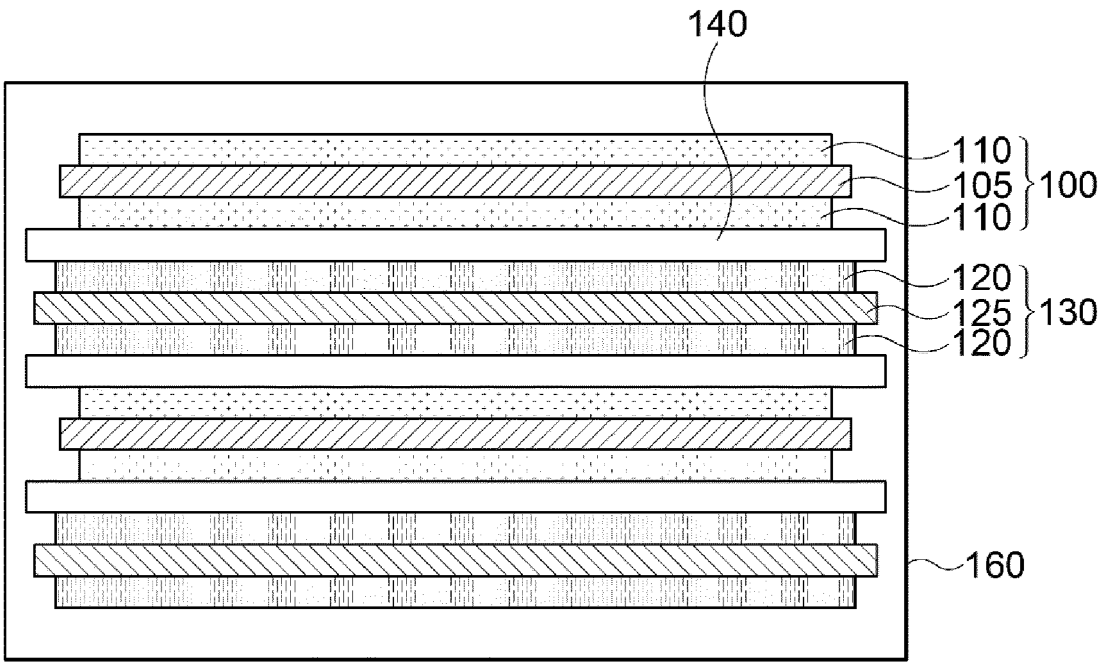

[FIG. 5]

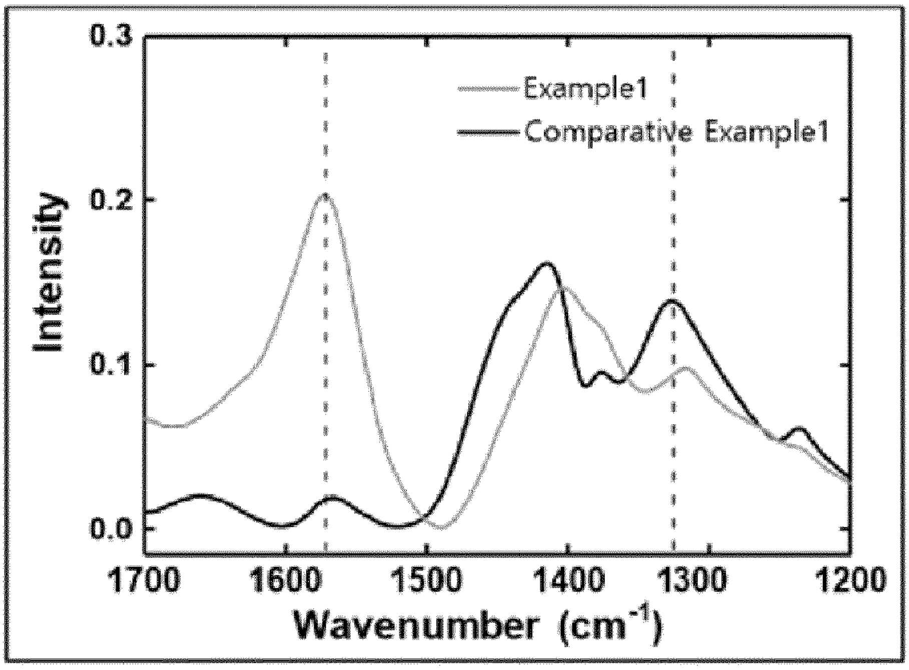
0.3
0.2
0.1
0.0
Intensity
Example1
Comparative Example1
1700
1600
1500
1400
1300
1200
Wavenumber (cm-1)

Europäisches Patentamt
European Patent Office
Office européen des brevets

# EUROPEAN SEARCH REPORT

Application Number
EP 22 21 3493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 866 225 A1 (LG ENERGY SOLUTION LTD [KR]) 18 August 2021 (2021-08-18)<br>* claims 1,5,9; examples 1-3 *<br>----- | 1-3,6,13,14<br>4,5,7-12 | INV.<br>H01M4/04<br>H01M4/131<br>H01M4/133<br>H01M4/1393<br>H01M4/62<br>H01M10/0525 |
| X<br>A | WO 2015/045350 A1 (TOYOTA JIDOSHOKKI KK [JP]) 2 April 2015 (2015-04-02)<br>* Test exemple F3;<br>claims 1,5,6 *<br>----- | 1-3,11,13,14<br>4-10,12 | |
| X<br>A | US 2019/140268 A1 (MATSUHARA SHINSUKE [JP] ET AL) 9 May 2019 (2019-05-09)<br>* paragraphs [0075] - [0079]; claims 1,4,6,7; examples 1-4 *<br>----- | 1-3,6,13,14<br>4,5,7-12 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 17 May 2023 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 21 3493

This annex lists the patent family members relating to the patent documents cited in the above-mentioned European search report. The members are as contained in the European Patent Office EDP file on
The European Patent Office is in no way liable for these particulars which are merely given for the purpose of information.

17-05-2023

| Patent document cited in search report | | Publication date | Patent family member(s) | | | Publication date |
|---|---|---|---|---|---|---|
| EP 3866225 | A1 | 18-08-2021 | CN | 112840480 | A | 25-05-2021 |
| | | | EP | 3866225 | A1 | 18-08-2021 |
| | | | KR | 20200093472 | A | 05-08-2020 |
| | | | US | 2022052345 | A1 | 17-02-2022 |
| | | | WO | 2020159202 | A1 | 06-08-2020 |
| WO 2015045350 | A1 | 02-04-2015 | JP | 6094840 | B2 | 15-03-2017 |
| | | | JP | WO2015045350 | A1 | 09-03-2017 |
| | | | WO | 2015045350 | A1 | 02-04-2015 |
| US 2019140268 | A1 | 09-05-2019 | CN | 109755495 | A | 14-05-2019 |
| | | | JP | 6986199 | B2 | 22-12-2021 |
| | | | JP | 2019087443 | A | 06-06-2019 |
| | | | US | 2019140268 | A1 | 09-05-2019 |

EPO FORM P0459

For more details about this annex : see Official Journal of the European Patent Office, No. 12/82